(19) Europäisches Patentamt / European Patent Office / Office européen des brevets

(11) **EP 4 325 619 A1**

(12) **EUROPEAN PATENT APPLICATION**
published in accordance with Art. 153(4) EPC

(43) Date of publication:
**21.02.2024 Bulletin 2024/08**

(21) Application number: **22907843.1**

(22) Date of filing: **08.12.2022**

(51) International Patent Classification (IPC):
**H01M 10/0565** $^{(2010.01)}$    **H01M 10/052** $^{(2010.01)}$

(52) Cooperative Patent Classification (CPC):
**H01M 10/052; H01M 10/0565; Y02E 60/10**

(86) International application number:
**PCT/KR2022/019904**

(87) International publication number:
**WO 2023/113376 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2021 KR 20210180710**

(71) Applicant: **LG ENERGY SOLUTION, LTD.**
**Seoul 07335 (KR)**

(72) Inventors:
- **LEE, Jung Pil**
  **Daejeon 34122 (KR)**
- **NAM, Sunghyun**
  **Daejeon 34122 (KR)**
- **KIM, Dong Kyu**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **POLYMER SOLID ELECTROLYTE AND ALL SOLID STATE BATTERY COMPRISING SAME**

(57) The present invention relates to a polymer solid electrolyte and an all solid state battery comprising same. When the polymer solid electrolyte is prepared, an ion-conductive polymer and polymer particles having a density similar to that of the ion-conductive polymer are used as a raw material so as to increase the uniformity of the prepared polymer solid electrolyte, and thus improve the strength thereof.

FIG. 1

EP 4 325 619 A1

## Description

This application is a National Stage Application of International Application No. PCT/KR2022/019904 filed on December 8, 2022, which claims the benefit of priority based on Korean Patent Application No. 2021-0180710 filed on December 16, 2021.

## Field of Disclosure

One aspect of the present disclosure relates to a polymer solid electrolyte and an all-solid-state battery comprising the same.

Background

Currently, from the viewpoint of the capacity, safety, output, large size, and miniaturization of a battery, various batteries that can overcome the limitations of a lithium secondary battery are being studied.

Representatively, there are ongoing studies on a metal-air battery with a very large theoretical capacity in terms of capacity compared to current lithium secondary batteries, an all-solid-state battery, which is not explosive in terms of safety, a supercapacitor in terms of output, a NaS battery or RFB (redox flow battery) in terms of large size, a thin-film battery in terms of miniaturization and the like.

Among them, the all-solid-state battery refers to a battery in which the liquid electrolyte used in conventional lithium secondary batteries is replaced with a solid one, and since the all-solid-state battery does not use flammable solvents in the battery, and thus does not cause ignition or explosion due to the decomposition reaction of the conventional electrolyte, the safety can be greatly improved. In addition, since Li metal or Li alloy can be used as a material for the negative electrode, there is an advantage that the energy density for the mass and volume of the battery can be dramatically improved.

As such, the all-solid-state battery is attracting attention as a next-generation lithium secondary battery in that it is excellent in terms of safety and its manufacturing process can be simplified.

However, as electronic devices have recently become thinner, the demand for solid electrolytes applied to the all-solid-state battery is also increasing as a solid electrolyte in the form of a thin film, but there is a problem that the solid electrolyte has weakened strength as it is thinned.

Accordingly, in order to manufacture a high-strength solid electrolyte thin film, a technology of adding ceramic to the high-strength solid electrolyte thin film has been developed, but there is a problem that the uniformity of the solid electrolyte is lowered due to the density ratio of the ceramic and the polymer included in the solid electrolyte. If the uniformity of the solid electrolyte is lowered, when ions move through the solid electrolyte film, there will be a difference in the concentration and/or the rate. As a result, non-uniform reaction occurs at the negative electrode, or, in severe cases, as lithium dendrites are formed, the lifetime characteristics and stability may be deteriorated.

In addition, in order to manufacture a high-strength solid electrolyte thin film, a technology for attaching the separator to the solid electrolyte has been developed, but there is also a problem that the uniformity of the solid electrolyte is lowered due to the different interface between the separator and the solid electrolyte.

Accordingly, it is required to develop a technology for manufacturing a uniform high-strength solid electrolyte in the form of a thin film.

## Related Art

Korean Patent Publication No. 2020-0036918

## Summary

The inventors of one aspect of the present disclosure have conducted various studies to solve the above problems, and as a result, have confirmed that when manufacturing a polymer solid electrolyte containing an ion conducting polymer, the strength of the manufactured polymer solid electrolyte is improved by using polymer particles as the additive, wherein the polymer particles have a density similar to that of the ion conducting polymer.

Therefore, it is an object of one aspect of the present disclosure to provide a high strength polymer solid electrolyte in the form of a thin film and a manufacturing method thereof.

In addition, it is another object of one aspect of the present disclosure to provide an all-solid-state battery containing the high strength polymer solid electrolyte in the form of a thin film.

Therefore, it an object of one aspect of the present disclosure to provide a high strength polymer solid electrolyte in the form of a thin film and a manufacturing method thereof.

In addition, it another object of one aspect of the present disclosure to provide an all-solid-state battery containing the high strength polymer solid electrolyte in the form of a thin film.

In order to achieve the above objects, one aspect of the present disclosure provides a polymer solid electrolyte comprising an ion conducting polymer, a lithium salt, and polymer particles compatible with the ion conducting polymer, wherein a density ratio ($\Delta$d) of the ion conducting polymer and the polymer particles is 3 or less.

The density ratio ($\Delta$d) is 0.5 to 2.5, and is calculated by the following Equation 1:

$$[\text{Equation 1}]$$

$$\triangle d = d2/d1$$

wherein d1 is a density of the ion conducting polymer, and d2 is a density of the polymer particles.

The ion conducting polymer may comprise one or more selected from the group consisting of polyether-based polymer, polycarbonate-based polymer, acrylate-based polymer, polysiloxane-based polymer, phosphazene-based polymer, polyethylene derivative, alkylene oxide derivative, phosphoric acid ester polymer, poly agitation lysine, polyester sulfide, polyvinylalcohol, polyvinylidene fluoride, polymers containing ionic dissociative groups, polypyrrole, polyaniline (PANI), and poly(3,4-ethylenedioxythiophene): poly(styrenesulfonate)(PEPOT: PSS).

The lithium salt is expressed as $Li^+X^-$, and the anion ($X^-$) of the lithium salt may be $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, or $(CF_3CF_2SO_2)_2N^-$.

The polymer particle comprises an engineering plastic resin, and the engineering plastic resin may comprise one or more selected from the group consisting of polyphenylene sulfide (PPS), polyetheretherketone, polyimide, polyamideimide, liquid crystal polymer, polyetherimide, polysulfone, polyarylate, polyethylene terephthalate, polybutylene terephthalate, polyoxymethylene, polycarbonate, polypropylene, polyethylene, and poly(methyl methacrylate).

The polymer solid electrolyte may comprise 45 to 95% by weight of the ion conducting polymer, 2 to 50% by weight of the lithium salt, and 2 to 35% by weight of the polymer particles.

The particle diameter ($d_{50}$) of the polymer particle may be less than 20 gm.

The solid electrolyte may be in the form of a thin film having a thickness of 5 gm to 100 gm.

Another aspect of the present disclosure also provides a method for preparing a polymer solid electrolyte comprising the steps of: (S1) forming a mixed solution of an ion conducting polymer, a lithium salt, polymer particles, and an organic solvent; (S2) coating the mixed solution on a substrate to form a coating layer; and (S3) drying the coating layer formed on the substrate to form a polymer solid electrolyte, wherein the density ratio ($\Delta$d) of the ion conducting polymer and the polymer particles is 3 or less.

The organic solvent may comprise one or more selected from the group consisting of an alcohol-based solvent, a glycol ether-based solvent, a glycol ether ester-based solvent, a ketone-based solvent, a hydrocarbon-based solvent, a lactate-based solvent, an ester-based solvent, an aprotic sulfoxide-based solvent and a nitrile-based solvent.

The other aspect of the present disclosure also provides an all-solid-state battery comprising the solid electrolyte.

According to one aspect of the present disclosure, when manufacturing the polymer solid electrolyte, an ion conducting polymer and polymer particles having a small density ratio with the ion conducting polymer are used as raw materials, thereby enhancing the uniformity of the polymer solid electrolyte, and thus there is an effect that the polymer solid electrolyte manufactured can have a thin film form and at the same time, exhibit high strength characteristics.

**Brief Description of Drawings**

FIG. 1 is a schematic diagram showing the structure of the polymer solid electrolyte according to an embodiment of one aspect of the present disclosure.

FIG. 2 is a schematic diagram showing the process for manufacturing the polymer solid electrolyte according to an embodiment of one aspect of the present disclosure.

**Detailed Description**

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his disclosure in the best way possible.

**Polymer solid electrolyte**

One aspect of the present disclosure relates to a polymer solid electrolyte, wherein the polymer solid electrolyte comprises an ion conducting polymer, a lithium salt, and the polymer particles. The density ratio ($\triangle$d), which is defined as the density ratio between the ion conducting polymer and the polymer particle, may be 3 or less, specifically 0.5 to 2.5. If the density ratio is less than 0.5 or exceeds 2.5, phase separation may occur in a mixing process and a drying process, and as a result, a non-uniform film may be manufactured.

In one aspect of the present disclosure, by limiting the density ratio of the ion conducting polymer and the polymer particles to within a certain range, phase separation between the ion conducting polymer and the polymer particles in the polymer solid electrolyte is prevented, and the uniformity and strength of the polymer solid electrolyte can be improved.

The density ratio ($\triangle$d), which is defined as the density ratio of the ion conducting polymer and the polymer particles, may be calculated by the following Equation 1:

$$[Equation\ 1]$$

$$\triangle d\ =\ d2/d1$$

wherein d1 is the density of the ion conducting polymer and d2 is the density of the polymer particles.

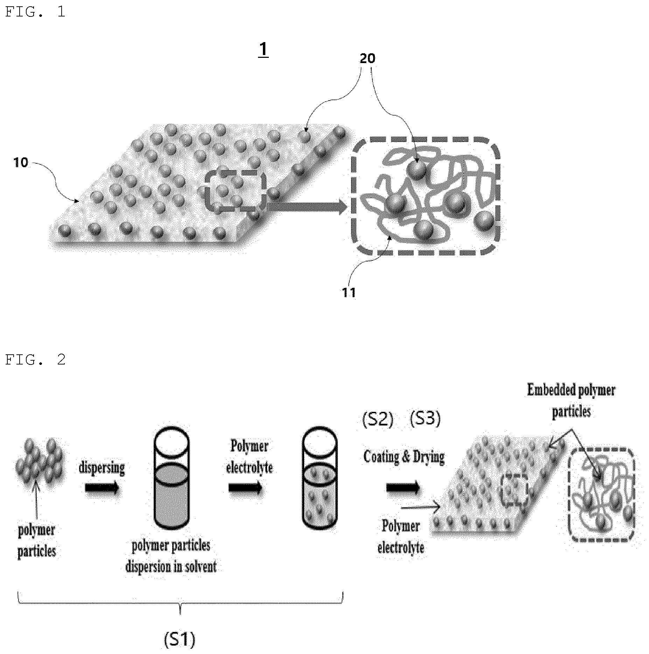

FIG. 1 is a schematic diagram showing the structure of the polymer solid electrolyte according to an embodiment of one aspect of the present disclosure.

Referring to FIG. 1, the polymer solid electrolyte 1 has a form in which the polymer particles 20 are uniformly dispersed inside the polymer solid electrolyte matrix 10. Specifically, the polymer particles 20 may be embedded and uniformly dispersed inside the ion conducting polymer matrix and/or the polymer chain 11.

In one aspect of the present disclosure, the polymer may be an ion conducting polymer, but is not limited thereto, and may be a polymer comprised in the solid electrolyte to form a path through which ions are transmitted.

The ion conducting polymer may be one or more selected from the group consisting of polyether-based polymer, polycarbonate-based polymer, acrylate-based polymer, polysiloxane-based polymer, phosphazene-based polymer, polyethylene derivative, alkylene oxide derivative, phosphoric acid ester polymer, poly agitation lysine, polyester sulfide, polyvinylalcohol, polyvinylidene fluoride, polymers containing ionic dissociative groups, polypyrrole, polyaniline (PANI), and poly(3,4-ethylenedioxythiophene): poly(styrenesulfonate)(PEPOT: PSS). Preferably, the ion conducting polymer may be polyethylene oxide (PEO).

In addition, the ion conducting polymer may be comprised in an amount of 45 to 95% by weight based on the total weight of the polymer solid electrolyte. Specifically, the content of the ion conducting polymer may be 45% by weight or more, 50% by weight or more, 60% by weight or more, or 70% by weight or more, and may be 80% by weight or less, 85% by weight or less, 90% by weight or less, or 95% by weight or less. If the content of the ion conducting polymer is less than 50% by weight, there is a problem that the volume of the ion conducting polymer is reduced and thus the ion conductivity is lowered. If the content of the ion conducting polymer exceeds 95% by weight, there may be a problem that the effect of improving the performance of the polymer solid electrolyte is insignificant.

In one aspect of the present disclosure, the polymer particles may comprise a polymer compatible with the ion conducting polymer. By using such polymer particles, the phase separation with the ion conducting polymer contained in the polymer solid electrolyte is prevented, so that the uniformity of the polymer solid electrolyte can be enhanced and at the same time, the strength can also be improved. In this case, the degree of affinity between the ion conducting polymer and the polymer particles can be defined as a density ratio, and by limiting the density ratio between the ion conducting polymer and the polymer particles to within a specific range, phase separation between them is prevented, and thus the uniformity of the polymer solid electrolyte can be enhanced.

The polymer particles may comprise an engineering plastic resin. The engineering plastic resin may comprise one or more selected from the group consisting of polyphenylene sulfide (PPS), polyetheretherketone, polyimide, polyamideimide, liquid crystal polymer, polyetherimide, polysulfone, polyarylate, polyethylene terephthalate, polybutylene terephthalate, polyoxymethylene, polycarbonate, polypropylene, polyethylene, and poly(methyl methacrylate). In addition, the engineering plastic resin may have a molecular weight of 100,000 Da to 10,000,000 Da.

In addition, the density of the polymer particles may be 0.8 to 2.2 g/cm$^3$. Considering the density ratio ($\triangle$d) with the ion conducting polymer, polymer particles having a density satisfying the above range may be appropriately selected and used.

In addition, the ion conducting polymer may be contained in an amount of 2 to 35% by weight based on the total weight of the polymer solid electrolyte. Specifically, the content of the ion conducting polymer may be 5% by weight or more, 10% by weight or more, or 20% by weight or more, and may be 30% by weight or less, 32% by weight or less, or 35% by weight or less. If the content of the ion conducting polymer is less than 5% by weight, there is a problem that the performance improvement by the composite is insignificant. If the content of the ion conducting polymer exceeds 35% by weight, there may be a problem that the ion conductivity is reduced.

In addition, the particle diameter of the polymer particles may be 50 nm to 20 gm. If the particle diameter is less than 50 nm, there is a problem that agglomeration occurs due to a high specific surface area. If the particle diameter exceeds 20 gm, there may be a problem in thinning the electrolyte film.

In addition, the strength of the polymer particles may be greater than that of the ion conducting polymer. Specifically, the Young's modulus (E) of the polymer particles may be 1500 MPa to 4 GPa. If the Young's modulus (E) of the polymer particles is less than 1500 MPa, the strength improvement effect is insignificant. If the Young's modulus (E) of the polymer particles exceeds 4 Gpa, it may be difficult to proceed with the process. The strength of the ion conducting polymer may mean the strength of a specimen of the ion conducting polymer.

In one aspect of the present disclosure, the lithium salt can improve the ion conductivity of the polymer solid electrolyte.

The lithium salt is an ionizable lithium salt and can be expressed as $Li^+X^-$. The anion ($X^-$) of the lithium salt is not particularly limited as long as it can form a salt with a lithium cation. For example, the anion ($X^-$) of the lithium salt may be $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, or $(CF_3CF_2SO_2)_2N^-$.

In addition, the lithium salt may be comprised in an amount of 2 to 50% by weight based on the total weight of the polymer solid electrolyte. Specifically, the content of the lithium salt may be 5% by weight or more, 10% by weight or 12% by weight or more, and may be 20% by weight or less, 30% by weight or less, 40% by weight or less, or 50% by weight or less. If the content of the lithium salt is less than 5% by weight, the ion conductivity of the solid electrolyte may be decreased. If the content of the lithium salt exceeds 50% by weight, the content of the ion conducting polymer may be relatively reduced, thereby resulting in reduced ion conductivity or precipitation of the lithium salt.

In one aspect of the present disclosure, the thickness of the polymer solid electrolyte may be 5 $\mu$m to 100 $\mu$m. The thickness of the polymer solid electrolyte is reduced compared to the general polymer solid electrolyte, showing the form of a thin polymer solid electrolyte, and the uniformity of the thickness is also improved. Specifically, the thickness of the polymer solid electrolyte may be 5 gm or more, 10 gm or more, 15 gm or more, or 20 gm or more, and may be 32 $\mu$m or less, 40 gm or less, 60 gm or less, 80 gm or less, or 100 gm or less.

If the thickness of the polymer solid electrolyte is less than 5 gm, the durability may be decreased. If the thickness of the polymer solid electrolyte exceeds 100 gm, it acts as resistance during operation of the battery, or the energy density may be lowered.

**Manufacturing method of solid electrolyte**

Another aspect of the present disclosure also relates to a method for manufacturing a polymer solid electrolyte, wherein the manufacturing method of the solid electrolyte comprises a method for manufacturing a solid electrolyte comprising the steps of: (S1) forming a mixed solution of an ion conducting polymer, a lithium salt, polymer particles compatible with the ion conducting polymer, and an organic solvent; (S2) coating the mixed solution on a substrate to form a coating layer; and (S3) drying the coating layer formed on the substrate to form a polymer solid electrolyte.

FIG. 2 is a schematic diagram showing the process for manufacturing the solid electrolyte according to an embodiment of another aspect of the present disclosure. The manufacturing method of the solid electrolyte according to another aspect of the present disclosure will be described in detail for each step with reference to FIG. 2.

In another aspect of the present disclosure, in step (S1), an ion conducting polymer, a lithium salt, and polymer particles may be added to an organic solvent to form a mixed solution. The types and contents of the ion conducting polymer, the lithium salt, and the polymer particles are as described above.

The organic solvent may be one that can dissolve the polymer and the lithium salt, disperse the polymer particles, and has a characteristic of volatilizing upon drying.

The organic solvent may be one or more volatile organic solvent selected from the group consisting of an alcohol-based solvent, a glycol ether-based solvent, a glycol ether ester-based solvent, a ketone-based solvent, a hydrocarbon-based solvent, a lactate-based solvent, an ester-based solvent, an aprotic sulfoxide-based solvent, and a nitrile-based solvent. Specifically, the volatile organic solvent may be one or more selected from the group consisting of acetone, tetrahydrofuran, methylene chloride, chloroform, dimethylformamide, N-methyl-2-pyrrolidone, methyl ethyl ketone, and cyclohexane.

In addition, the concentration of the mixed solution may be appropriately selected within the range of 20 to 40% to a concentration that can smoothly perform the coating process of step (S2) described later.

In another aspect of the present disclosure, in step (S2), the mixed solution may be applied on a substrate to form a coating layer.

The substrate may be in the form of a foil, and the foil may be a metal selected from the group consisting of aluminum, copper, stainless steel, and Ni, or the substrate may be in the form of a thin film of a polymer release film such as polyethylene terephthalate (PET). By using it as the substrate, it can be advantageous for the manufacture of the polymer solid electrolyte in the form of a uniform freestanding film.

In addition, the coating method may be a bar coating method, a roll coating method, a spin coating method, a slit coating method, a die coating method, a blade coating method, a comma coating method, a slot die coating method, a lip coating method, and a solution casting method, but the coating method is not limited thereto as long as it is a coating method capable of forming a coating layer on the substrate.

In another aspect of the present disclosure, in step (S3), the coating layer formed on the substrate is dried to prepare a polymer solid electrolyte.

The drying is not particularly limited as long as the drying method can evaporate the organic solvent. For example, the drying may be performed at 100 °C or lower.

After manufacturing the solid electrolyte, the substrate may be separated and removed.

**All-solid-state battery**

The other aspect of the present disclosure also relates to an all-solid-state battery comprising the solid electrolyte described above, wherein the all-solid-state battery may comprise a positive electrode, a negative electrode, and a solid electrolyte interposed therebetween.

In the other aspect of the present disclosure, the positive electrode comprises a positive electrode current collector and a positive electrode active material layer formed on the positive electrode current collector.

The positive electrode active material layer comprises a positive electrode active material, a binder, and an electrically conductive material.

The positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), $Li[Ni_xCo_yMn_zM_v]O_2$ (wherein, M is any one or two or more elements selected from the group consisting of Al, Ga, and In; $0.3 \leq x < 1.0$, $0 \leq y$, $z \leq 0.5$, $0 \leq v \leq 0.1$,, $x+y+z+v=1$), $Li(Li_aM_{b-a-b'}M'_{b'})O_{2-c}A_c$ (wherein, $0 \leq a_{0.2}$, $0.6 \leq b \leq 1$, $0 \leq b' \leq 0.2$, $0 \leq c \leq 0.2$; M comprises Mn and one or more selected from the group consisting of Ni, Co, Fe, Cr, V, Cu, Zn, and Ti; M' is one or more selected from the group consisting of Al, Mg, and B, and A is one or more selected from the group consisting of P, F, S, and N); lithium manganese oxide such as Formula $Li_{1+y}Mn_{2-y}O_4$ (wherein, y is 0 - 0.33), $LiMnO_3$, $LiMn_2O_3$, $LiMnO_2$; lithium copper oxide ($Li_2CuO_2$); vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M=Co, Mn, Al, Cu, Fe, Mg, B, or Ga, y=0.01 - 0.3); lithium manganese composite oxide represented by Formula $LiMn_{2-y}M_yO_2$ (wherein, M=Co, Ni, Fe, Cr, Zn, or Ta, y=0.01 - 0.1) or $Li_2Mn_3MO_8$ (wherein, M=Fe, Co, Ni, Cu, or Zn); $LiMn_2O_4$ in which part of Li in the Formula is substituted with alkaline earth metal ions; disulfide compounds; $Fe_2(MoO_4)_3$.

The positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80% by weight, mass transfer resistance may be increased.

In addition, the binder is a component that assists bonding between the positive electrode active material and the electrically conductive material, and assists in bonding to the current collector. The binder may comprise one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and, specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the electrically conductive material is not particularly limited as long as it prevents side reactions in the internal environment of the all-solid-state battery, and has excellent electrical conductivity without causing chemical changes in the battery. The electrically conductive material may be typically graphite or conductive carbon, and for example, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; and electrically conductive polymers such as polyphenylene derivatives may be used alone or in combination of two or more thereof as the electrically conductive material, but is not necessarily limited thereto.

The electrically conductive material may be generally contained in an amount of 0.5% by weight to 30% by weight based on the total weight of the positive electrode active material layer, and specifically, the content of the electrically conductive material may be 0.5% by weight or more or 1% by weight or more, and may be 20% by weight or less or 30% by weight or less. If the content of the electrically conductive material is too small, i.e., less than 0.5% by weight, it is difficult to expect an effect of improving electrical conductivity or the electrochemical properties of the battery may be deteriorated. If the content of the electrically conductive material exceeds 30% by weight and thus is too large, the amount of the positive electrode active material may be relatively small, so that the capacity and energy density may be lowered. A method for incorporating the electrically conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid-state battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode may be manufactured by coating and drying a composition for forming the positive electrode active material layer prepared by mixing the positive electrode active material, the electrically conductive material, and the binder in an organic solvent, onto the positive electrode current collector, and optionally compression-molding it onto the positive electrode current collector to improve the positive electrode density. At this time, as the organic solvent, it is preferable to use one that can uniformly disperse the positive electrode active material, the binder, and the electrically conductive material and that evaporates easily. Specifically, acetonitrile, methanol, ethanol, tetrahydrofuran, water, isopropyl alcohol and the like are exemplified.

In the other aspect of the present disclosure, the negative electrode comprises a negative electrode current collector and a negative electrode active material layer formed on the negative electrode current collector. The negative electrode active material layer comprises a negative electrode active material, a binder, and an electrically conductive material.

The negative electrode active material may be a material capable of reversibly intercalating or de-intercalating lithium ion (Li$^+$), a material capable of reacting with lithium ion to reversibly form a lithium-containing compound, lithium metal, or a lithium alloy.

The material capable of reversibly intercalating or de-intercalating lithium ion (Li$^+$) may be, for example, crystalline carbon, amorphous carbon, or mixtures thereof. The material capable of reacting with lithium ion (Li$^+$) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminium (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40% by weight or more or 50% by weight or more, and may be 70% by weight or less or 80% by weight or less. If the content of the negative electrode active material is less than 40% by weight, the connectivity between the wet negative electrode active material layer and the dry negative electrode active material layer may be insufficient. If the content of the negative electrode active material exceeds 80% by weight, mass transfer resistance may be increased.

In addition, the binder is the same as described above for the positive electrode active material layer.

In addition, the electrically conductive material is the same as described above for the positive electrode active material layer.

In addition, the negative electrode current collector is not particularly limited as long as it has electrical conductivity without causing chemical change in the battery, and for example, the negative electrode current collector may be copper, stainless steel, aluminium, nickel, titanium, sintered carbon; copper or stainless steel surface-treated with carbon, nickel, titanium, silver, etc.; or aluminum-cadmium alloy. In addition, the negative electrode current collector may be used in various forms, such as a film having a fine irregularity structure on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of another aspect of the present disclosure.

The manufacture of the all-solid-state battery having the above configuration is not particularly limited in another aspect of the present disclosure, and a known method may be used.

When manufacturing the all-solid-state battery of another aspect of the present disclosure, electrodes comprising the positive electrode and the negative electrode are arranged, and then press-molded to assemble a cell.

The assembled cell is installed in the exterior material, and then sealed by heat compression or the like. As the exterior material, a laminate pack made of aluminum or stainless steel, and a cylindrical or prismatic metal container are very suitable.

Hereinafter, preferred examples of the present disclosure will be described in order to facilitate understanding of the present disclosure. It will be apparent to those skilled in the art, however, that the following examples are only illustrative of the present disclosure and various changes and modifications can be made within the scope and spirit of the present disclosure, and that such variations and modifications are within the scope of the appended claims.

In the following Examples and Comparative Examples, solid electrolytes were prepared according to the type and weight ratio of the substrate, the polymer, the lithium salt, and the solvent as shown in Table 1 below.

[Table 1]

| | | Polymer solid electrolyte | | | | | | | | Density ratio of ion conducting polymer and polymer particles (d2/d1) |
|---|---|---|---|---|---|---|---|---|---|---|
| | | Ion conducting polymer | | | Polymer particle | | | Lithium salt | | |
| | | Type | Density (d1, g/cm$^3$) | Weight (% by weight) | Type | Density (d2, g/cm$^3$) | Weight (% by weight) | Type | Weight (% by weight) | |
| | Example 1 | PEO | 1.125 | 72 | PEEK | 1.23 | 20 | LiTFSI | 8 | 1.09 |
| | Example 2 | PEO | 1.125 | 63 | PEEK | 1.23 | 30 | LiTFSI | 7 | 1.09 |
| | Example 3 | PEO | 1.125 | 72 | PPS | 1.35 | 20 | LiTFSI | 8 | 1.2 |
| | Comparative Example 1 | PEO | 1.125 | 90 | - | - | - | LiTFSI | 10 | - |
| | Comparative Example 2 | PEO | 1.125 | 72 | ZnO | 5.61 | 20 | LiTFSI | 8 | 4.99 |

(continued)

| | Polymer solid electrolyte | | | | | | | | |
| --- | --- | --- | --- | --- | --- | --- | --- | --- | --- |
| | Ion conducting polymer | | | Polymer particle | | | Lithium salt | | Density ratio of ion conducting polymer and polymer particles (d2/d1) |
| | Type | Density (d1, g/cm$^3$) | Weight (% by weight) | Type | Density (d2, g/cm$^3$) | Weight (% by weight) | Type | Weight (% by weight) | |
| Comparative Example 3 | PEO | 1.125 | 63 | ZnO | 5.61 | 30 | LiTFSI | 7 | 4.99 |
| Comparative Example 4 | PEO | 1.125 | 72 | LLZO | 5.108 | 20 | LiTFSI | 8 | 4.54 |

**Example 1**

Polyethylene oxide (PEO, d1=1.125 g/cm3, Mw=1,000,000 g/mol) as a polymer, polyether ether ketone (PEEK, d2=1.23 g/cm$^3$, Solvay company) as a polymer particle, and LiTFSI (Sigma Aldrich company) as a lithium salt were mixed in NMP as an organic solvent to prepare a mixed solution. At this time, the weight ratio of the polymer, the polymer particles, and the lithium salt was set to 72: 20: 8. The concentration of the mixed solution was set to 30%. The polymer particles having a particle diameter (d50) of 10 gm and a Young's modulus of 3.62 Gpa was used, and the density ratio (d2/d1) of the density (d1) of the ion conducting polymer and the density (d2) of the polymer particles is 1.09.

The mixed solution was bar-coated on a polyethylene terephthalate (PET) release film as a substrate to form a coating layer.

Thereafter, the coating layer was vacuum dried at 100°C and then separated from the substrate to prepare a polymer solid electrolyte.

**Example 2**

A polymer solid electrolyte was prepared in the same way as in Example 1, except that the weight ratio of the ion conducting polymer, the polymer particles, and the lithium salt is set to be 63: 30: 7.

**Example 3**

A polymer solid electrolyte and an all-solid-state battery were manufactured in the same manner as in Example 1, except that as the polymer particles, PPS (Solvay company, d50 = 10 gm, d2 = 1.35 g/cm3, 3800 MPa) is used instead of PEEK.

**Comparative Example 1**

A polymer solid electrolyte and an all-solid-state battery were manufactured in the same manner as in Example 1, except that the polymer particles are not used.

**Comparative Example 2**

A polymer solid electrolyte and an all-solid-state battery were manufactured in the same manner as in Example 1, except that as the polymer particles, ZnO (Sigma Aldrich, d2=5.61 g/cm$^3$, d50 = 5 gm) is used instead of PEEK.

**Comparative Example 3**

A polymer solid electrolyte and an all-solid-state battery were manufactured in the same manner as in Example 2, except that as the polymer particles, ZnO (Sigma Aldrich, d2=5.61 g/cm3, d50 = 5 gm) is used instead of PEEK.

**Comparative Example 4**

A polymer solid electrolyte and an all-solid-state battery were manufactured in the same manner as in Example 1, except that as the polymer particles, LLZO (Lithium Lanthanum Zirconium oxide, d2=5.108 g/cm$^3$) is used instead of PEEK.

**Experimental Example 1: Evaluation of polymer solid electrolyte**

For the polymer solid electrolytes prepared in the Examples and Comparative Examples, the density difference between the polymer and the polymer particle, the thickness of the polymer solid electrolyte, and the ion conductivity were tested as follows, and the results are shown in Table 2 below.

(1) Ion conductivity

After contacting the sample of the polymer solid electrolyte with a lithium metal electrode having the same surface area, an alternating voltage was applied through the electrodes on both sides of the sample at room temperature. In this case, the measurement frequency as an applied condition was set to an amplitude range of 0.01 Hz to 1 MHz, and impedance was measured using BioLogic company's VMP3. The resistance of the polymer solid electrolyte was obtained from the intersection point ($R_b$) where the semicircle or straight line of the measured impedance trajectory meets the real number axis, and the ion conductivity of the polymer solid electrolyte was calculated from the area and thickness of the sample.

$$[Equation\ 2]$$

$$\sigma(S \cdot cm^{-1}) = \frac{1}{R_b}\frac{t}{A}$$

σ: Ion conductivity
$R_b$: Intersection point of the impedance trajectory with the real number axis
A: Area of sample
t: Thickness of sample

[Table 2]

|  | Measured temperature (°C) | Thickness (μm) | Ion conductivity (S/cm) |
|---|---|---|---|
| Example 1 | 60 | 20 | 1.5.E-05 |
| Example 2 | 60 | 32 | 1.8.E-05 |
| Example 3 | 60 | 22 | 1.4.E-05 |
| Comparative Example 1 | 60 | 36 | 5.5.E-05 |
| Comparative Example 2 | 60 | 23 | 9.0.E-05 |
| Comparative Example 3 | 60 | 45 | 3.8.E-05 |
| Comparative Example 4 | 60 | 34 | 9.7.E-05 |

As described in Table 2 above, it was found that when PEO and polymer particles are comprised together in the polymer solid electrolyte, compared to when the polymer of PEO alone is comprised as in Comparative Example 1, the crystallinity of PEO is lowered, and the ion transfer at the interface is eased, thereby improving the ion conductivity. However, it was found that in the case of Comparative Examples 2 to 4, where the density ratio is greatly different, the ion conductivity is decreased due to agglomeration, as in the case of Comparative Example 3, where an excess amount is added.

In the above, although the present disclosure has been described by way of limited embodiments and drawings, the present disclosure is not limited thereto, and it is apparent to those skilled in the art that various modifications and variations can be made within the equivalent scope of the technical spirit of the present disclosure and the claims to be described below.

[Description of Reference Numerals]

1: Polymer solid electrolyte
10: Polymer solid electrolyte matrix
11: Polymer chain
20: Polymer particle

**Claims**

1. A polymer solid electrolyte comprising an ion conducting polymer, a lithium salt, and polymer particles, wherein the ion conducting polymer and the polymer particle have a density ratio ($\triangle$d) of 3 or less.

2. The polymer solid electrolyte according to claim 1, wherein the density ratio($\triangle$d) is 0.5 to 2.5, and is calculated by Mathematical Formula 1:

$$<\text{Mathematical Formula 1}>$$

$$\triangle d = d2/d1$$

wherein d1 is the density of the ion conducting polymer, and d2 is the density of the polymer particles.

3. The polymer solid electrolyte according to claim 1, wherein the ion conducting polymer comprises one or more selected from the group consisting of polyether-based polymer, polycarbonate-based polymer, acrylate-based polymer, polysiloxane-based polymer, phosphazene-based polymer, polyethylene derivative, alkylene oxide derivative, phosphoric acid ester polymer, poly agitation lysine, polyester sulfide, polyvinylalcohol, polyvinylidene fluoride, polymers containing ionic dissociative groups, polypyrrole, polyaniline (PANI), and poly(3,4-ethylenedioxythiophene): poly(styrenesulfonate)(PEPOT: PSS).

4. The polymer solid electrolyte according to claim 1, wherein the lithium salt is expressed as $Li^+X^-$, and the anion ($X^-$) of the lithium salt is $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, or $(CF_3CF_2SO_2)_2N^-$.

5. The polymer solid electrolyte according to claim 1, wherein the polymer particles comprises an engineering plastic resin, and the engineering plastic resin comprises one or more selected from the group consisting of polyphenylene sulfide (PPS), polyetheretherketone, polyimide, polyamideimide, liquid crystal polymer, polyetherimide, polysulfone, polyarylate, polyethylene terephthalate, polybutylene terephthalate, polyoxymethylene, polycarbonate, polypropylene, polyethylene, and polymethyl methacrylate.

6. The polymer solid electrolyte according to claim 1, wherein the polymer solid electrolyte comprises 45 to 95% by weight of the ion conducting polymer, 2 to 50% by weight of the lithium salt, and 2 to 35% by weight of the polymer particles.

7. The polymer solid electrolyte according to claim 1, wherein the particle diameter ($d_{50}$) of the polymer particles is less than 20 $\mu$m.

8. The polymer solid electrolyte according to claim 1, wherein the solid electrolyte is in the form of a thin film having a thickness of 5 $\mu$m to 100 $\mu$m.

9. A method for manufacturing a polymer solid electrolyte comprising the steps of:

(S1) adding an ion conducting polymer, a lithium salt, and polymer particles to an organic solvent to form a mixed solution;
(S2) coating the mixed solution on a substrate; and

(S3) drying the coating layer formed on the substrate to form a polymer solid electrolyte,
wherein the density ratio ($\Delta$d), which is defined as the density ratio between the ion conducting polymer and the polymer particle, is 3 or less.

10. A method for manufacturing a polymer solid electrolyte according to claim 9, wherein the organic solvent comprises one or more selected from the group consisting of an alcohol-based solvent, a glycol ether-based solvent, a glycol ether ester-based solvent, a ketone-based solvent, a hydrocarbon-based solvent, a lactate-based solvent, an ester-based solvent, an aprotic sulfoxide-based solvent, and a nitrile-based solvent.

11. An all-solid-state battery comprising a positive electrode, a negative electrode, and the polymer solid electrolyte of claim 1.

FIG. 1

FIG. 2

<div align="center">

## INTERNATIONAL SEARCH REPORT

</div>

| International application No. |
|---|
| **PCT/KR2022/019904** |

### A.    CLASSIFICATION OF SUBJECT MATTER

**H01M 10/0565**(2010.01)i; **H01M 10/052**(2010.01)i

According to International Patent Classification (IPC) or to both national classification and IPC

### B.    FIELDS SEARCHED

Minimum documentation searched (classification system followed by classification symbols)

H01M 10/0565(2010.01); H01B 1/06(2006.01); H01G 9/038(2006.01); H01M 10/0525(2010.01); H01M 10/056(2010.01); H01M 10/058(2010.01); H01M 12/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자 고체 전해질(polymer solid electrolyte), 고분자 입자(polymer particle), 리튬염(lithium salt), 밀도(density)

### C.    DOCUMENTS CONSIDERED TO BE RELEVANT

| Category* | Citation of document, with indication, where appropriate, of the relevant passages | Relevant to claim No. |
|---|---|---|
| A | JP 2000-149659 A (TDK CORP.) 30 May 2000 (2000-05-30)<br>        See claims 1 and 11; and paragraphs [0042] and [0061]. | 1-11 |
| A | CN 110994014 A (SOUTH UNIVERSITY OF SCIENCE AND TECHNOLOGY OF CHINA) 10 April 2020 (2020-04-10)<br>        See claims 1-10. | 1-11 |
| A | CN 108963327 A (SAI WEI ELECTRONIC MATERIAL LIMITED LIABILITY COMPANY OF ZHUHAI CITY et al.) 07 December 2018 (2018-12-07)<br>        See claims 1-9. | 1-11 |
| A | KR 10-2017-0092327 A (SAMSUNG ELECTRONICS CO., LTD. et al.) 11 August 2017 (2017-08-11)<br>        See entire document. | 1-11 |
| A | CN 111653823 A (NANJING UNIVERSITY OF POSTS AND TELECOMMUNICATIONS) 11 September 2020 (2020-09-11)<br>        See entire document. | 1-11 |

☑ Further documents are listed in the continuation of Box C.          ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 March 2023** | **17 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/019904** |

**C.     DOCUMENTS CONSIDERED TO BE RELEVANT**

| Category* | Citation of document, with indication, where appropriate, of the relevant passages | Relevant to claim No. |
|---|---|---|
| A | KR 10-2014-0127442 A (KOREA INSTITUTE OF MACHINERY & MATERIALS) 04 November 2014 (2014-11-04)<br>        See entire document. | 1-11 |

Form PCT/ISA/210 (second sheet) (July 2022)

**INTERNATIONAL SEARCH REPORT**
Information on patent family members

International application No.

**PCT/KR2022/019904**

| Patent document cited in search report | | | Publication date (day/month/year) | Patent family member(s) | | | Publication date (day/month/year) |
|---|---|---|---|---|---|---|---|
| JP | 2000-149659 | A | 30 May 2000 | JP | 4112712 | B2 | 02 July 2008 |
| CN | 110994014 | A | 10 April 2020 | | None | | |
| CN | 108963327 | A | 07 December 2018 | CN | 108963327 | B | 06 July 2021 |
| KR | 10-2017-0092327 | A | 11 August 2017 | CN | 107039680 | A | 11 August 2017 |
| | | | | US | 2017-0222244 | A1 | 03 August 2017 |
| CN | 111653823 | A | 11 September 2020 | CN | 111653823 | B | 06 July 2021 |
| KR | 10-2014-0127442 | A | 04 November 2014 | KR | 10-1502350 | B1 | 16 March 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2022019904 W
- KR 20210180710
- KR 20200036918